(19) Europäisches Patentamt
European Patent Office
Office européen des brevets

(11) **EP 3 099 180 B1**

(12) **EUROPÄISCHE PATENTSCHRIFT**

(45) Veröffentlichungstag und Bekanntmachung des Hinweises auf die Patenterteilung:
**06.06.2018 Patentblatt 2018/23**

(21) Anmeldenummer: **15703870.4**

(22) Anmeldetag: **24.01.2015**

(51) Int Cl.:
***A23C 3/033*** *(2006.01)*

(86) Internationale Anmeldenummer:
**PCT/EP2015/000135**

(87) Internationale Veröffentlichungsnummer:
**WO 2015/113750 (06.08.2015 Gazette 2015/31)**

(54) **VERFAHREN UND UHT-ANLAGE ZUR HERSTELLUNG EINER TRINKFÄHIGEN MISCHUNG AUS EINER TRÄGERFLÜSSIGKEIT UND WENIGSTENS EINER ZEREALIE UNTER ASEPTISCHEN BEDINGUNGEN**

METHODS AND UHT PLANT FOR PRODUCING A DRINKABLE MIXTURE FROM A CARRIER LIQUID AND AT LEAST ONE CEREAL UNDER ASEPTIC CONDITIONS

PROCÉDÉ ET INSTALLATION UHT DE PRODUCTION EN CONDITIONS ASEPTIQUES D'UN MÉLANGE BUVABLE À PARTIR D'UN VÉHICULE LIQUIDE ET D'AU MOINS UNE CÉRÉALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2014 DE 102014001294**

(43) Veröffentlichungstag der Anmeldung:
**07.12.2016 Patentblatt 2016/49**

(73) Patentinhaber: **GEA TDS GmbH**
**31157 Sarstedt (DE)**

(72) Erfinder:
• **SCHWENZOW, Uwe**
**48683 Ahaus (DE)**
• **SCHLÖSSER, Wolfgang**
**48683 Ahaus (DE)**
• **LÜTKE SUNDERHAUS, Ludger**
**48712 Gescher (DE)**
• **GEHLING, Jürgen**
**48703 Stadtlohn (DE)**
• **ROLLE, Ulrich**
**48351 Everswinkel (DE)**

(74) Vertreter: **Hauck Patentanwaltspartnerschaft mbB**
**Postfach 11 31 53**
**20431 Hamburg (DE)**

(56) Entgegenhaltungen:
EP-A1- 0 662 284         DE-A1- 1 492 360
DE-A1-102005 055 016      US-A- 1 109 975
US-A1- 2003 091 716

EP 3 099 180 B1

**Beschreibung**

TECHNISCHES GEBIET

Die Erfindung betrifft ein Verfahren zur Herstellung einer trinkfähigen Mischung aus einer Trägerflüssigkeit und wenigstens einer Zerealie, vorzugsweise eine festkörperartige, teilchenförmige, quellfähige Zerealie, und/oder anderen kleinstückigen Beimengungen unter aseptischen Bedingungen und eine Vorrichtung zur Durchführung des Verfahrens, die als UHT-Anlage (UHT: Ultra-Hoch-Temperatur) ausgebildet ist, sowie insbesondere eine trinkfähige Mischung, bestehend aus Trinkmilch als Trägerflüssigkeit und beispielsweise Reis oder/und Hafer als Zerealie/n, hergestellt durch Anwendung des erfindungsgemäßen Verfahrens und der erfindungsgemäßen Vorrichtung.

Trinkfähige Mischung bedeutet im vorliegenden Falle, dass diese nicht in löffelfähiger Konsistenz verzehrt werden muss, sondern mit einem Stroh- oder Trinkhalm problemlos aufgenommen werden kann. Der Begriff Zerealie soll im Folgenden neben Reis und Hafer beispielsweise auch Weizenkörner, die nur mit kaltem Wasser gewässert werden, umfassen sowie festkörperartige, kleinstückige Beimengungen wie Früchte, Nüsse oder Samen. Unter festkörperartig soll eine Zerealie oder Beimengung angesehen werden, wenn sie nicht durch Hitze- oder mechanische Einwirkung im Behandlungsprozess zerstört ist und damit beispielsweise ihre Körnerstruktur weitestgehend behält. Unter kleinstückig soll eine Zerealie oder Beimengung quantifiziert werden, die mit einer Mindestgröße beim Trinken noch wahrnehmbar ist (beispielweise Samen oder ähnliches mit einem größten Partikeldurchmesser von 1 bis 2 mm) oder die mit einer maximalen Partikelabmessung von nicht mehr als 5 mm noch trinkbar ist, insbesondere mit einem Stroh- oder Trinkhalm.

STAND DER TECHNIK

Es sind UHT-Anlagen bekannt, die eine trinkfähige Mischung aus einer niedrigviskosen Trinkmilch als Trägerflüssigkeit und Reis als Zerealie nur unter der Bedingung erzeugen können, wenn der Reis, bezogen auf den Trinkmilchanteil, deutlich unter 6 Gewichts-Prozent bleibt. Diesbezügliche UHT-Anlagen sind, bezogen auf die Strömungsrichtung der Mischung gesehen, ab der Dosierstelle des Reises in die Trinkmilch als sog. Einrohr-Rohrwärmeaustauscher ausgebildet. Dieser Wärmeaustauscher wird auch als Monorohr- oder Monotube-Wärmeaustauscher bezeichnet, bei dem das thermisch zu behandelnde Produkt die Innenseite eines einen Innenkanal bildenden einzigen Wärmeaustauscherrohres berührt und bei dem ein Wärmeträgermedium in einem von einem Außenmantel umgebenden Außenkanal die Außenseite dieses Wärmeaustauscherrohres vorzugsweise im Gegenstrom beaufschlagt. Diese Ausführungsform weist eine geringe Verstopfungsanfälligkeit auf. Allerdings ergeben sich rheologische und thermische Probleme bei der Auslegung und dem Betrieb dieses Wärmeaustauschertyps.

Die Verwendung des Monorohr-Wärmeaustauschers bei der Herstellung der trinkfähigen Mischung der in Rede stehenden Art ist dem Sachverhalt geschuldet, dass beispielsweise die Reiskörner, die im Zuge ihrer Wärmebehandlung in der Trägerflüssigkeit Trinkmilch quellen, dabei Stärke in die Trägerflüssigkeit abgeben und diese dadurch höherviskos machen, zusätzlich noch zur Verklumpung neigen, wodurch allenfalls das Monorohr geeignet ist, die entstehende hochviskose und verstopfungsanfällig Mischung störungsfrei zu transportieren. Wenn allerdings der Reisanteil bis 6 % und ggf. mehr betragen soll, dann versagen die bisherigen UHT-Anlagen mit Blick auf eine wünschenswerte Herstellung einer trinkfähigen Mischung, selbst wenn sie in ihren kritischen Bereichen hinter der Dosierstelle als Monorohr ausgebildet sind. Im besten Falle entsteht dann ein löffelfähiges bzw. löffelfestes Reisdessert.

Zur thermischen Behandlung der in Rede stehenden hochviskosen Produkte der Nahrungsmittel- und Getränkeindustrie, die u.U. faserige oder stückige Beimengungen enthalten, ist der kostengünstigste Wärmeaustauschertyp, der PlattenWärmeaustauscher, gänzlich ungeeignet. Er findet seine verfahrenstechnische Begrenzung auf homogene Produkte mit niedriger bis mittlerer Viskosität.

Ein weiteres Problem entsteht, wenn im Zuge der thermischen Behandlung der trinkfähigen Mischung aus Trägerflüssigkeit und faserigen oder stückigen Beimengungen letztere in dem Wärmeaustauscherrohr sedimentieren, sich dabei zusammenklumpen und an der Rohrwand ansetzen oder im ungünstigsten Falle dort anbrennen.

Es ist weiterhin mit Blick auf die Herstellung der trinkfähigen Mischung erwünscht, dass sich die der Trägerflüssigkeit beigemischte(n) Zerealie(n), beispielsweise Reis und/oder Hafer, nicht vollständig auflösen, sondern dass ihre Stückigkeit, möglichst gleichverteilt und vereinzelt, beim Trinken noch spürbar bleibt. Diese Forderung betrifft auch andere kleinstückige Beimengungen, die in der Trägerflüssigkeit Aufnahme finden können. Dies erfordert in allen Fällen auch eine schonende mechanische Behandlung der stückigen Beimengungen auf dem Weg durch die gesamte UHT-Anlage. Einerseits muss der Sedimentation durch hinreichenden, wiederholten Strömungsimpuls entgegengewirkt, andererseits muss die mechanische Belastung der beigemengten Zerealie(n) und/oder der anderen kleinstückigen Beimengungen so niedrig wie möglich gehalten werden. Eine diesbezügliche Belastung tritt insbesondere immer dann auf, wenn die Mischung aus Trägerflüssigkeit und Zerealie(n) bzw. Beimengungen Scherkräften unterworfen wird. Letztere treten notorisch bei Umlenkungen, unstetigen Querschnittsübergängen, Verzweigungen und Vereinigungen von Strömungsführungen auf, die in UHT-Anlage der in Rede stehenden Art nicht durchgängig vermieden werden können.

Bei der Herstellung einer trinkfähigen Mischung, bestehend beispielsweise aus Trinkmilch und Hafer und/oder Reis, wird angestrebt, dass einerseits der Hafer in nativem Zustand, nämlich kalt und trocken, in die Trägerflüssigkeit Trinkmilch dosiert werden kann, und dass andererseits die Verwendung von sog. "Allerweltsreis" möglich ist, der lediglich vor seiner Dosierung eine spezielle, angepasste Vorgarung erfahren muss und dann unter bestimmten thermodynamischen Zustandsbedingungen dosiert werden kann. Als Allerweltsreis wird im Kontext zur vorstehenden Problematik ein Reis bezeichnet, der unterschiedliches Gar- und Sterilisationsverhalten aufweist, je nach Sorte, Herkunft und natürlichen erntebedingten Schwankungen. Solche rohstoffbedingten Schwankungen haben üblicherweise Auswirkungen auf das Endprodukt; sie sollen beherrschbar und kompensierbar sein.

In der EP 0 662 284 A1 ist ein Verfahren zur Herstellung eines direkt verzehrbaren sterilen Michbreis in kontinuierlicher Weise beschrieben, bei dem man Milch erhitzt, diese Milch mit mindestens einer Zerealie mischt, die erhaltene Mischung einer zweiten Erhitzung unterwirft, die erhitzte Mischung entgast, einer UHT-Behandlung unterwirft und schließlich kühlt. Der Partikeldurchmesser der Zerealie liegt zwischen 0,4 und 1 mm. Es wird ein Milchbrei gewonnen, der fließfähig und löffelfest ist und die Körnerstruktur und einen guten Geschmack behält. Die zweite Erhitzung wird auf klassische Weise mit einem Röhrenerhitzer durchgeführt. Die Entgasung der Mischung erfolgt dann bei atmosphärischem Druck und bei ca. 100 °C. Anschließend wird die UHT-Behandlung bei 130 bis 140 °C durch direkte Erhitzung, beispielsweise durch direkte Injektion von Dampf in die Mischung, durchgeführt.

Die DE 10 2005 055 016 A1 beschreibt ein Verfahren zur thermischen Behandlung hochviskoser Produkte der Nahrungsmittel- und Getränkeindustrie, insbesondere mit faserigen oder stückigen Beimengungen. Das thermisch zu behandelnde Produkt berührt hierbei in einem Röhren-Wärmeaustauscher die Innenseite eines einen Innenkanal bildenden Wärmeaustauscherrohres (Monorohr). Ein Wärmeträgermedium beaufschlagt in einem von einem Außenmantel umgebenen Außenkanal die Außenseite des Wärmeaustauscherrohres. Ein unmittelbar wandnah im und ohne feste Verbindung zum Wärmeaustauscherrohr angeordnetes Einbauelement mit freiem Innendurchgang erhöht die Wärmeübergangsleistung, indem es durch Fremdenergie von außerhalb des Röhren-Wärmeaustauschers rotierend angetrieben ist und es dadurch in seinem wandnahen Eingriffsbereich und über die gesamte wärmeaustauscherrelevante Länge des Wärmeaustauscherrohres das Produkt durchmischt und in diesem eine zusätzliche axiale und eine zusätzliche tangentiale Geschwindigkeitskomponente erzeugt. Die axiale Geschwindigkeitskomponente unterstützt die Förderung des Produktes im Wärmeaustauscherrohr. Darüber hinaus ist eine Anordnung aus mehr als einem Röhren-Wärmeaustauscher vorgesehen, wobei die Röhren-Wärmeaustauscher parallel zueinander angeordnet und durch jeweils beidseitig an ihnen angeordnete Verbindungsbogen mäanderförmig in Reihe geschaltet sind.

Die US 1 109 975 A offenbart einen Pasteur in der Ausgestaltung eines Einrohr-Röhren-Wärmeaustauschers, in dem innerhalb eines Innenrohres die zu erhitzende Milch strömt und in einem Ringraum, der von dem Innenrohr und einem dieses Innenrohr umgebenden Außenrohr gebildet wird, ein Wärmeträgermedium, vorzugsweise Heißwasser, fließt. Das Innenrohr besteht aus mehreren parallel zueinander angeordneten geradlinigen Rohrleitungsabschnitten, die durch jeweils beidseitig an ihnen angeordnete 180-Grad-Umlenkbogen mäanderförmig in Reihe geschaltet sind. Das Innenrohr ist hinsichtlich seiner Gesamtlänge und seines Durchtrittsquerschnitts so bemessen, dass in Verbindung mit der mittleren Strömungsgeschwindigkeit der zu pasteurisierenden Milch im Innenrohr die Milch die notwendige Verweilzeit im Pasteur erfährt.

Es ist Aufgabe der vorliegenden Erfindung, ein Verfahren und eine Vorrichtung zur Herstellung einer trinkfähigen Mischung aus einer Trägerflüssigkeit und wenigstens einer Zerealie, vorzugsweise eine festkörperartige, teilchenförmige und quellförmige Zerealie, und/oder anderen kleinstückigen Beimengungen unter aseptischen Bedingungen anzugeben, insbesondere eine trinkfähige Mischung aus Trinkmilch als Trägerflüssigkeit und Reis oder/und Hafer, durch die der Gehalt der wenigstens einen Zerealie über das im Stand der Technik bislang erreichte Maß hinaus gesteigert, die gewünschten sensorisch erfahrbaren Eigenschaften, wie spürbare Stückigkeit und Gleichverteilung der Beimengungen, sichergestellt und die Verwendung von nativen, üblicherweise verfügbaren Zerealien ermöglicht werden und eine Sedimentation der Zerealie und/oder der Beimengungen verhindert wird.

ZUSAMMENFASSUNG DER ERFINDUNG

Diese Aufgabe wird durch ein Verfahren mit den Merkmalen des Anspruchs 1 gelöst. Vorteilhafte Ausgestaltungen des Verfahrens sind Gegenstand der Unteransprüche. Eine Vorrichtung zur Durchführung des erfindungsgemäßen Verfahrens ist Gegenstand des Nebenanspruchs 12. Vorteilhafte Ausgestaltungen der Vorrichtung sind Gegenstand der zugeordneten Unteransprüche.

Der erfinderische Grundgedanke besteht darin, und die erfinderische Lösung manifestiert sich am augenfälligsten an der schwierigsten Aufgabe, nämlich der thermischen Behandlung der Zerealie Reis (im Folgenden wird die Zerealie bzw. werden die Zerealien auch unter dem Begriff "Beimengungen" subsummiert), die dosierten und vorgegarten Reiskörner in dem kritischsten Bereich ihrer thermischen Behandlung, dem Bereich ihrer Vorquellung in der Vor- und Hocherhitzung, so in der Trägerflüssigkeit Trinkmilch in Schwebe zu halten, dass sie nicht miteinander konglomerieren, sich nicht an den Wänden des Monorohres ansetzen und dabei möglichst wenig mechanisch beansprucht, d.h. möglichst geringen Scherkräften ausgesetzt werden.

Die aseptischen Bedingungen, die für die Herstellung des trinkfähigen Produkts gefordert werden, werden in an sich bekannter Weise durch die Realisierung eines produktspezifischen Temperaturprofils in der UHT-Anlage sichergestellt. Hierzu gehört nach der Dosierung des Reises, der die Vorwärmung der Trägerflüssigkeit, wie beispielsweise Trinkmilch, vorgeschaltet ist, eine Wärmebehandlung, bestehend üblicherweise aus einer Vorerhitzung, einer Hocherhitzung, einer Heißhaltung mit einem UHT-Profil (spezieller Temperatur-Zeit-Verlauf) und einer nachfolgende Kühlung auf Lagerungs- oder Abfülltemperatur. Eine Endquellung und Sterilisation des Gemisches aus Trinkmilch und Reis, im allgemeinen Fall aus Trägerflüssigkeit und Beimengungen, vollzieht sich in der Heißhaltung.

Ein erstes Lösungselement der vorliegenden Erfindung besteht darin, das thermisch zu behandelnde Gemisch im Verlauf seiner Wärmebehandlung nach der Dosierung der Beimengungen bis zur trinkfähigen Mischung durchgängig als unverzweigte Rohrströmung zwangsweise zu führen. Dies bedeutet, dass das strömende Gemisch an keiner Stelle seines Strömungsweges in parallele Teilströme aufgeteilt bzw. verzweigt wird und die Strömung durchgängig als durch wandförmige Berandung erzwungene Strömung ausgestaltet ist. Voraussetzung hierfür bildet die Verwendung eines Einrohr-Systems in allen Bereichen der thermischen Behandlung zwischen Dosierung der Beimengungen und Abfüllung oder Lagerung des trinkfähigen Produkts. Die jeweilige mittlere Strömungsgeschwindigkeit in den Teilbereichen der Wärmebehandlung richtet sich nach den produktspezifischen Erfordernissen und ist vorzugsweise durchgängig kontinuierlich und konstant.

Ein weiteres Lösungselement bildet die Zerlegung oder abschnittsweise Separierung der unverzweigten Rohrströmung in jedem der Teilbereiche der Wärmebehandlung. Hierzu wird in jedem Teilbereich die unverzweigte Rohrströmung in eine Gruppe mäanderförmig sich aneinanderreihende Rohrströmungs-Abschnitte zerlegt, wobei die Rohrströmung dabei unverzweigt bleibt. Unter mäanderförmig sollen vorzugsweise geradlinige Abschnitte verstanden werden, die vorzugsweise parallel und im Abstand zueinander angeordnet und wechselseitig an benachbarten Enden, bei Sicherstellung einer durchgehenden Verbindung in Strömungsrichtung, vorzugsweise mit stetig gekrümmten Strömungselementen, beispielsweise 180-Grad-Rohrbogen, miteinander verbunden sind.

Ein Rohrströmungs-Abschnitt rS ist als ein rohrförmiges Volumen V zu verstehen, das von der Rohrströmung mit einem vorzugsweise konstanten Volumenstrom Q durchsetzt wird. Im allgemeinsten Fall kann der Rohrströmungs-Abschnitt rS, über seine Länge l gesehen, einen veränderlichen Durchtrittsquerschnitt aufweisen. In Praxis wird sein Durchtrittsquerschnitt vorzugsweise konstant sein und somit wird das Volumen V des Rohrströmungs-Abschnitts rS dem Volumen V eines Rohrleitungs-Abschnitts L gleicher Länge l und gleichen Durchtrittsquerschnitts A entsprechen (Monorohr), das vom Volumenstrom Q und damit von einer mittleren Strömungsgeschwindigkeit c durchströmt wird. Damit lässt sich ein hilfreiches Behandlungskriterium der Mischung aus Trägerflüssigkeit TF und Beimengungen definieren, nämlich die mittlere Verweilzeit t.

Definition der mittleren Verweilzeit im Rahmen der vorliegenden Erfindung

Für einen Rohrströmungs-Abschnitt rS mit Volumen V und einem Volumenstrom Q gilt für die Verweilzeit t allgemein:

$$t(rS) = \frac{Volumen\ des\ Rohrstr\ddot{o}mungs-Abschnitts\ V}{Volumenstrom\ Q} \qquad (1)$$

Unter der Voraussetzung, dass beim Rohrströmungs-Abschnitt rS der Durchtrittsquerschnitt A über die Länge l konstant ist, entspricht die mittlere Verweilzeit t jener in einem Rohrleitungsabschnitt L der gleichen Länge l mit konstantem Durchtrittsquerschnitt A nach Gleichung (1):

$$t(rS) = \frac{V}{Q} = t(L) = \frac{l\ A}{c\ A} = \frac{l}{c} \qquad (1a)$$

Die vorstehend definierte Verweilzeit t betrifft das Passieren eines einzigen Rohrströmungs-Abschnittes rS oder eines einzigen Rohrleitungs-Abschnittes L ohne die Verweilzeit in den Rohrbogen durch ein Teilchen des Gemischs, und zwar in einer Vorerhitzung, einer Hocherhitzung, einer Heißhaltung oder einer Kühlung. Die gesamte Verweilzeit in den jeweiligen Bereichen setzt sich damit aus der Summe aller jeweiligen Rohrströmungs- oder Rohrleitungs-Abschnitte ohne die Verweilzeit in den Umlenkungen (Rohrbogen) zusammen.

Ein weiteres und besonders zielführendes Lösungselement besteht darin, um das Ziel, eine Sedimentation der Beimengungen in der Trägerflüssigkeit im Bereich der kritischen Vorquellung zu verhindern, dass im Bereich der Vorquellung eine mittlere erste Verweilzeit des Gemischs in den jeweils zugeordneten ersten Rohrströmungs-Abschnitten kürzer ist als eine mittlere zweite Verweilzeit in jeweils zugeordneten zweiten Rohrströmungs-Abschnitten im Bereich der Endquellung und der nachfolgenden Kühlung. Durch die kürzere mittlere erste Verweilzeit des Gemischs in den vorzugsweise waagerecht orientierten Rohrströmungs-Abschnitten wird der Sedimentation unter dem Einfluss der Schwerkraft rechtszeitig entgegengewirkt. Bevor sich die Beimengungen, in Strömungsrichtung gesehen, im Endbereich des jeweiligen Rohrströmungs-Abschnitts an der berandenden Wandung ablagern können, erfolgt eine Umlenkung in den nachfolgenden Rohrströmungs-Abschnitt. Da eine Umlenkung in Form einer Krümmung immer auch im durchströmten Umlenkungsquerschnitt eine Sekundärströmung initiiert, die dann im nachfolgenden Strömungsquerschnitt voll ausgebildet ist, bewirkt die erfindungsgemäße rechtzeitige Umlenkung eine zielführende Durchmischung und Gleichverteilung der Beimengungen in der Trägerflüssigkeit. Der vorstehend geschilderte Vorgang wiederholt sich in jedem Rohrströmungs-Abschnitt seiner Gruppe, deren Bestandteil er ist.

Im Bereich der Endquellung sind die gequollenen Beimengungen, z.B. Reiskörner, durch Extraktion von Stärke und/oder anderen Bestandteilen spezifisch leichter als im Bereich der Vorquellung. Gleichzeitig erhöhen sich Dichte und Viskosität des Gemischs von der Vorquellung bis zur Endquellung und somit ist die Gefahr der Sedimentation in den zugeordneten Rohrströmungs-Abschnitten der Endquellung zwangsläufig geringer als im Bereich der Vorquellung. Im Bereich der unkritischen Endquellung kann die mittlere zweite Verweilzeit des Gemischs daher länger als die mittlere erste Verweilzeit im Bereich der kritischen Vorquellung sein. Da die Wärmebehandlung in den aufeinanderfolgenden Behandlungszonen der UHT-Anlage in einer unverzweigten Rohrströmung stattfindet und die Trägerflüssigkeit mit den Beimengungen ein inkompressibles Fluid darstellt, wirken sich rheologische Unterschiede in den Bereichen der Vor- und der Endquellung, bedingt beispielsweise durch Stärkeabgabe der Zerealie(n), auf den jeweiligen Druckverlust, nicht aber auf die jeweilige Verweilzeit in diesen Bereichen aus.

Das erfindungsgemäße Verfahren gibt zielführende Relationen zwischen den Bereichen der Vor- und Endquellung an. Ein darüber hinaus gehender Vorschlag sieht mit Blick auf eine konkrete Bemessung der mittleren ersten Verweilzeit vor, dass die mittlere erste Verweilzeit kürzer ist als eine mittlere dritte Verweilzeit, die sich in dritten Rohrströmungs-Abschnitten der Vorerhitzung oder Hocherhitzung einstellen würde, wenn die Vor- und Hocherhitzung für die reine Trägerflüssigkeit ausgelegt würden. Damit ist die konkrete Bemessung für die ersten Rohrströmungs-Abschnitte und auch für die zweiten Rohrströmungs-Abschnitte festgelegt.

Ein Abweichen von der erfindungsgemäßen Bemessungsrelation zwischen der mittleren ersten und der mittleren zweiten Verweilzeit, indem die zweite Verweilzeit kürzer als erfindungsgemäß vorgesehen ausgeführt wird, verringert zwar die Sedimentationsneigung im Bereich der Endquellung, sie führt aber durch zusätzlich notwendig werdende Umlenkungen zu einer höheren Scherbeanspruchung der durch Quellung empfindlicheren bzw. weniger robusten Beimengungen und in jedem Falle zu höheren Anlagekosten und ist damit kontraproduktiv.

Die mittlere erste Verweilzeit ist in jedem ersten Rohrströmungs-Abschnitt seiner zugeordneten Gruppe gleichlang bemessen und die mittlere zweite Verweilzeit ist in jedem zweiten Rohrströmungs-Abschnitt seiner zugeordneten Gruppe gleichlang bemessen, wobei dies keine zwingende Forderung ist. Sie können bei Einhaltung des Sedimentationskriteriums prinzipiell auch unterschiedlich lang bemessen werden, was jedoch unter Kostengesichtspunkten ungünstig ist.

Besonders gute Ergebnisse mit Blick auf die Herstellung der gewünschten trinkfähigen Mischung unter Qualitäts- und Kostengesichtspunkten werden erzielt, wenn bei der Differenzierung unterschiedlicher Behandlungsnotwendigkeiten zwischen dem Bereich der Vor- und jenem der Endquellung die mittlere erste Verweilzeit halb so groß wie die mittlere zweite Verweilzeit ist. Mit Blick auf die mittlere dritte Verweilzeit ist festzustellen, dass die mittlere erste Verweilzeit zweckmäßig halb so groß wie die mittlere dritte Verweilzeit zu bemessen ist. Diese Relationen sind Festlegungen, die quantitativ in begrenztem Maße in die eine oder andere Richtung abweichen können.

Der Sedimentation und Neigung zur Konglomeration der Beimengungen in der Trägerflüssigkeit wird zusätzlich entgegengewirkt, wenn, wie dies eine Ausgestaltung des Verfahrens vorsieht, der axial orientierten, mittleren Strömungsgeschwindigkeit der Rohrströmung im Bereich der Vorquellung zwangsweise eine Strömungsgeschwindigkeit in Umfangsrichtung und/oder eine Turbulenzerhöhung aufgeprägt wird. Dies kann durch auf die Rohrströmung in Umfangsrichtung einwirkende Mittel erfolgen, die auf den die Strömung berandenden Wandungen in Form beispielsweise von schraubenförmig angeordneten Erhebungen oder Vertiefungen ausgebildet sind. Eine diesbezügliche Maßnahme erzeugt, ebenso wie die Umlenkung zwischen zwei Rohrströmungs-Abschnitten, auch im vorzugsweise geradlinig ausgebildeten Rohrströmungs-Abschnitt Fliehkräfte. Diese Fliehkräfte initiieren Sekundärströmungen, die einen zusätzlichen Mischeffekt erzeugen. Darüber hinaus tragen diese Maßnahmen zu einer Turbulenzerhöhung in der thermischen und der hydraulischen Grenzschicht bei.

Die Qualität der trinkfähigen Mischung wird weiter erhöht, wenn nach einem Vorschlag verfahren wird, der vorsieht, dass das Gemisch die jeweilige Gruppe der sich vorzugsweise in einer senkrechten Ebene mäanderförmig aneinanderreihenden und dort vorzugsweise in der Waagerechten oder annähernd in der Waagerechten orientierten ersten und zweiten Rohrströmungs-Abschnitte von oben nach unten, demnach in Richtung der Schwerkraft bzw. Erdbeschleunigung, durchströmt. Bei dieser Strömungsweise überlagert sich der Rohrströmung die jeweilige Sinkgeschwindigkeit der Beimengung, die durch die resultierende Kraft aus Gewichts- und Auftriebskraft hervorgerufen wird. Dadurch kommt es zu einer Erhöhung Absolutgeschwindigkeit der Beimengung, während im umgekehrten Falle bei einer Strömung von unten nach oben eine Erniedrigung der Absolutgeschwindigkeit eintritt. Aus diesem Unterschied resultiert im Endergebnis ein Unterschied im Mischeffekt, der bei der vorgeschlagenen Durchströmung von oben nach unten größer und damit zielführender ist als bei einer Durchströmung von unten nach oben

Weiterhin ist vorgesehen, dass die Umlenkung der Rohrströmung zwischen zwei benachbarten ersten Rohrströmungs-Abschnitten mit größerer Krümmung als zwischen zwei benachbarten zweiten Rohrströmungs-Abschnitten durchgeführt wird. Darüber hinaus ist vorgesehen, dass die Umlenkung der Rohrströmung in Bereichen außerhalb der ersten oder zweiten Rohrströmungs-Abschnitte und, in Strömungsrichtung gesehen, hinter der Dosierung mit kleinerer Krümmung als zwischen zwei benachbarten zweiten Rohrströmungs-Abschnitten vollzogen wird. Größere Krümmung bedeutet kürzere Umlenkungswege, damit größere Scherkräfte und daraus resultierend wiederum eine höhere mechanisch Belastung. Dieser Vorschlag trägt dem Sachverhalt Rechnung, dass die Beimengungen im Bereich der Vorquellung noch robuster und damit belastbarer als im Bereich der Endquellung sind. Die geringste Krümmung im Bereich außerhalb der ersten und zweiten Rohrströmungs-Abschnitte - dies sind die Bereiche der Rohrströmung zwischen den Behandlungszonen, von der Dosierung bis zur Kühlung - ist der generellen Absicht geschuldet, die Beimengungen in Bereichen, die lediglich dem Transport dienen, so wenig wie möglich mechanisch zu belasten.

Um eine näherungsweise konstante und kontinuierliche Rohrströmung sicherzustellen, die möglichst frei ist von stagnierenden und/oder unkontrolliert oszillierenden Strömungsbereichen, sieht ein anderer Vorschlag vor, dass das Gemisch unmittelbar nach seiner Zubereitung durch ein Verdrängerprinzip zwangsgefördert wird.

Das vorgeschlagene Verfahren eignet sich besonders für die Herstellung einer trinkfähigen Mischung, bei der als Trägerflüssigkeit eine Trinkmilch und bei der wenigstens einen Zerealie zwischen Hafer, Reis oder Weizenkörner gewählt wird. Die notwendigen Eigenschaften von Hafer und Reis wurden vorstehend bereits teilweise definiert, wobei es vorteilhaft ist, den Hafer als Kornware und nicht vorgegart zu verwenden und derart nativ, kalt und trocken zu dosieren. Der Reis wird vorgegart eingesetzt und warm bei 70 °C und unter laminarer Belüftung dosiert. Die Weizenkörner werden, lediglich vorbehandelt durch Wässerung im kalten Wasser, dosiert.

Die Vorrichtung zur Durchführung des erfindungsgemäßen Verfahrens setzt die verfahrenstechnischen Lösungsmerkmale konsequent in gegenständliche Merkmale um. Die Vorrichtung ist im Grundsatz als UHT-Anlage ausgebildet, die in an sich bekannter Weise die zu fordernden aseptischen Produktionsbedingungen durch die Realisierung eines produktspezifischen Temperaturprofils sicherstellt. Hierzu gehört eine Vorwärmzone für die Trägerflüssigkeit, die wenigstens einen Wärmeaustauscher der Vorerhitzerzone aufweist. Dieser Wärmeaustauscher ist im Regelfall als Rohrbündel-Wärmeaustauscher ausgeführt und wird vorzugsweise regenerativ betrieben. Nach einer Dosiervorrichtung für die Einbringung der Zerealie(n) und/oder der Beimengungen in die Trägerflüssigkeit folgt, in Strömungsrichtung des Gemischs gesehen, eine Vorerhitzerzone und eine Hocherhitzerzone, die jeweils wenigstens einen Wärmeaustauscher aufweisen, eine Heißhalterzone, die einen Heißhalter aufweist, und eine Kühlzone, die wenigstens einen Wärmeaustauscher der Kühlzone aufweist.

In Strömungsrichtung des Gemischs gesehen sind die der Dosiervorrichtung nachfolgenden Wärmeaustauscher und der Heißhalter jeweils als Einrohr-System (Monorohr) ausgebildet und miteinander in Reihe geschaltet. Bei den Wärmeaustauschern handelt es sich jeweils um sog. Einrohr-Rohrwärmeaustauscher. Das jeweilige Monorohr ist in eine Gruppe mäanderförmig sich aneinanderreihende Rohrleitungs-Abschnitte zerlegt und bleibt dabei, strömungsmechanisch gesehen, als Monorohr erhalten und unverzweigt. Unter mäanderförmig sollen vorzugsweise geradlinige Rohrstrecken verstanden werden, die vorzugsweise parallel und im Abstand zueinander angeordnet und wechselseitig an benachbarten Enden, bei Sicherstellung einer durchgehenden Verbindung in Strömungsrichtung, vorzugsweise mit stetig gekrümmten Strömungselementen, beispielsweise 180-Grad-Rohrbogen, miteinander verbunden sind. Die Rohrleitungs-Abschnitte sind notorisch gleichlang ausgeführt, wobei dies keine zwingende Forderung ist. Sie können unter Einhaltung des Sedimentationskriteriums prinzipiell auch unterschiedlich lang ausgeführt werden, was jedoch unter Kostengesichtspunkten ungünstig ist.

Ein weiteres und besonders zielführendes Lösungselement besteht darin, dass unter der Voraussetzung eines für alle Monorohre gleichen Durchtrittsquerschnitts, was nicht zwingend erforderlich aber technisch und kostenmäßig zweckmäßig ist, im Bereich der Vorquellung, die sich in der Vor- und der Hocherhitzerzone vollzieht, die jeweiligen ersten Rohrleitungs-Abschnitte der zugeordneten Wärmeaustauscher kürzer sind als die jeweiligen zweiten Rohrleitungs-Abschnitte des Heißhalters und des wenigstens einen Wärmeaustauschers der Kühlzone.

Die erfindungsgemäße Vorrichtung gibt zielführende Relationen an zwischen den ersten Rohrleitungs-Abschnitten der Vor- und Hocherhitzerzone einerseits und den zweiten Rohrleitungs-Abschnitten der Heißhalterzone und der Kühlzone andererseits. Ein darüber hinaus gehender Vorschlag sieht mit Blick auf eine konkrete Bemessung der jeweiligen Rohrleitungs-Abschnitte vor, dass der jeweilige erste Rohrleitungs-Abschnitt kürzer ist als jeweilige dritte Rohrleitungs-Abschnitte der Vor- und Hocherhitzerzone, die sich ergäben, wenn die Vor- und Hocherhitzerzone für die reine Trägerflüssigkeit ausgelegt würden. Da das verfahrenstechnische Merkmal des Rohrströmungs-Abschnitts im engen gegenständlichen und funktionalen Zusammenhang mit dem Vorrichtungsmerkmal des Rohrleitungs-Abschnitts steht, sind die vorstehend im Zusammenhang mit dem erfindungsgemäßen Verfahren angegebenen Sachverhalte sinngemäß auf die erfindungsgemäße Vorrichtung zu übertragen und werden daher an dieser Stelle nicht wiederholt.

Unter Kostengesichtspunkten ist es von Vorteil, wie vorstehend bereits erwähnt, wenn jeder erste Rohrleitungs-Abschnitt in seiner zugeordneten Gruppe gleichlang ausgeführt ist und wenn jeder zweite Rohrleitungs-Abschnitt in seiner zugeordneten Gruppe gleichlang ausgeführt ist. Eine optimale Ausgestaltung mit Blick auf das angestrebte Ergebnis liegt vor, wenn die jeweiligen ersten Rohrleitungs-Abschnitte halb so lang wie die zweiten Rohrleitungs-Abschnitte sind. Mit Blick auf den dritten Rohrleitungs-Abschnitt ist festzustellen, dass der erste Rohrleitungs-Abschnitt jedenfalls halb so lang wie der dritte Rohrleitungs-Abschnitt ist. Diese Relationen sind Festlegungen, die quantitativ in begrenztem Maße in die eine oder andere Richtung abweichen können.

Es wurde weiterhin für die Herstellung eines trinkfähigen Gemischs aus den Zerealien Hafer und/oder Reis in der Trägerflüssigkeit Trinkmilch als zielführend herausgefunden, wenn die ersten Rohrleitungs-Abschnitte jeweils eine Länge von 3 Metern und die zweiten und die dritten Rohrleitungs-Abschnitte jeweils eine Länge von 6 Metern aufweisen.

Weiterhin ist vorgesehen, dass das Monorohr in den Wärmeaustauschern der Vorund Hocherhitzerzone wenigstens auf der Oberfläche seiner Rohrinnenwand mit schraubengangförmiger, erhabener oder vertiefender Profilierung ausgebildet ist. Diese Maßnahme dient der Turbulenzerhöhung gegenüber dem Glattrohr und erzeugt, bei hinreichender Bemessung insbesondere der erhabenen Profilierungen, die gewünschte Strömungskomponente in Umfangsrichtung. Aus der Wärmeübertragungstechnik ist bekannt, den Wärmeübergang im Vergleich zum sog. GlattRohr durch Profilierung der wärmeübertragenden Rohrinnen- und Rohraußenfläche zu verbessern. Hierzu werden schraubengangförmige Vertiefungen durch Umformtechniken in die Rohrwand eingebracht, wodurch zur Erzeugung dieser gewünschten Makro-Rauhigkeits-Strukturen keine zusätzliche Materialdicke erforderlich ist. Dies bedeutet, dass eine außenseitig angebrachte Vertiefung innenseitig eine entsprechende Erhöhung darstellt. Die so verformten dünnwandigen Rohre werden als sog. Drallrohre bezeichnet

Die Qualität der trinkfähigen Mischung wird, wie sich dies herausgestellt hat, bei Durchströmung der Rohrleitungs-Abschnitte in Richtung der Schwerkraft bzw. der Erdbeschleunigung weiter verbessert. Hierzu wird vorgeschlagen, dass die jeweilige Gruppe der sich mäanderförmig aneinanderreihenden ersten oder zweiten Rohrleitungs-Abschnitte jeweils in einer senkrechten Ebene angeordnet sind und dass die ersten oder zweiten Rohrleitungs-Abschnitte in der senkrechen Ebene jeweils in der Waagerechten bzw. im Wesentlichen in der Waagerechten orientiert sind. Am oberen Ende der jeweiligen Gruppe ist ein Zulauf- und am unteren Ende der jeweiligen Gruppe ist ein Ablauf-Anschluss vorgesehen.

Die in die Trägerflüssigkeit dosierten Zerealien sind als festkörperartige, teilchenförmige, quellfähige Bestandteile, von der Dosiervorrichtung an in Strömungsrichtung betrachtet, abnehmend mechanisch belastbar. Beimengungen im Bereich der Vorquellung sind robuster und damit belastbarer als im Bereich der Endquellung. Der in dieser Richtung zunehmenden Empfindlichkeit gegen Scherkräfte und die damit einhergehende Neigung zur Auflösung und Zerstörung der festkörperartigen und teilchenförmigen Struktur wird gemäß einem weiteren Vorschlag dadurch Rechnung getragen, dass die Rohrbögen der Verrohrung der UHT-Anlage, in Strömungsrichtung gesehen, hinter der Dosiervorrichtung vorzugsweise ein Verhältnis zwischen mittlerem Krümmungsradius r und Rohraußendurchmesser D von r/D = 5, der Rohrbogen zwischen zwei benachbarten zweiten Rohrleitungs-Abschnitten vorzugsweise ein Verhältnis r/D = 3 und zwischen zwei benachbarten ersten Rohrleitungs-Abschnitten vorzugsweise ein Verhältnis r/D gleich oder kleiner 2 ($r/D \leq 2$) aufweist.

Eine vorteilhafte konstante und kontinuierliche Förderung des Gemischs durch die Monorohre wird erreicht, wenn unmittelbar an einem Austritt der Dosiervorrichtung für das Gemisch eine rotierende Verdrängerpumpe, beispielsweise in Gestalt einer Schrauben-Spindel-Pumpe, angeordnet ist.

Die vorgeschlagene Vorrichtung eignet sich besonders für die Herstellung einer trinkfähigen Mischung, die aus einer Trinkmilch als Trägerflüssigkeit und wenigstens aus der Zerealie Hafer oder Reis besteht.

## KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausführungsformen realisiert ist, wird in der Zeichnung ein bevorzugtes Ausführungsbeispiel der Vorrichtung, mit der das erfindungsgemäße Verfahren durchführbar ist, dargestellt und nachfolgend nach Aufbau und Funktion beschrieben. Es zeigen

Figur 1    in schematischer Darstellung einen relevanten Teilbereich einer als UHT-Anlage ausgebildeten erfindungsgemäßen Vorrichtung, der auf wesentliche Merkmale reduziert ist;

Figur 2    einen in **Figur 1** mit "**X**" gekennzeichneten Ausschnitt aus der UHT-Anlage im Bereich eines als Monorohr ausgebildeten Wärmeaustauschers der Vorerhitzerzone und

Figur 3    in schematischer und vergrößerter Darstellung die mäanderförmige Ausbildung des Monorohres gemäß **Figur 2.**

DETAILLIERTE BESCHREIBUNG

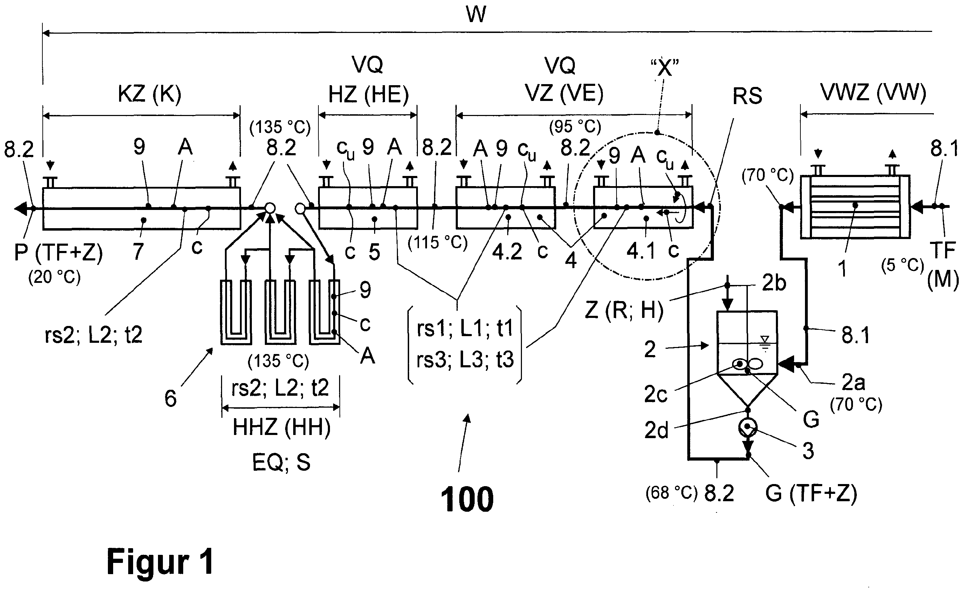

Ein in **Figur 1** dargestellter Teilbereich 100 einer Vorrichtung, die in Gänze als UHT-Anlage ausgebildet ist, besteht, ausgehend von einem ersten Leitungsabschnitt 8.1, in den eine Trägerflüssigkeit TF, beispielsweise Trinkmilch M, in der dargestellten Strömungsrichtung beispielsweise mit einer Temperatur von ca. 5 °C eintritt, bezüglich einer Wärmebehandlung W einer herzustellenden trinkfähigen Mischung P aus einer teilweise dargestellten Vorwärmzone VWZ, einer Vorerhitzerzone VZ, einer Hocherhitzerzone HZ, einer Heißhalterzone HHZ und einer teilweise dargestellten Kühlzone KZ. In dem dargestellten Teilbereich der Vorwärmzone VWZ ist ein letzter oder zumindest ein einziger Wärmeaustauscher der Vorwärmzone 1 dargestellt, die/der vorzugsweise als sog. Rohrbündel-Wärmeaustauscher ausgebildet sind/ist, in denen/dem eine Vorwärmung VW beispielsweise auf eine Temperatur von ca. 70 °C durchgeführt und die/der in der Regel regenerativ betrieben werden/wird. Bei dem Rohrbündel-Wärmeaustauscher handelt es sich vorzugsweise um eine Ausführung, wie sie in der DE-U-94 03 913 (Prinzip **Tuchenhagen Dairy Systems GmbH,** Ahaus) beschrieben ist und bei der mehrere parallel geschaltete Innenrohre vorgesehen sind, die von der Trägerflüssigkeit TF durchflossen werden, während ein Wärmeträgermedium, in der Regel Wasser oder Dampf, im Ringspaltraum (Außenkanal) eines Mantelrohres (Außenmantel), welches die parallel geschalteten Innenrohre umgibt, im Gegenstrom strömt.

In der Vorerhitzerzone VZ findet eine Vorerhitzung VE statt, wobei wenigstens ein vorzugsweise regenerativ betriebener Wärmeaustauscher der Vorerhitzerzone 4 vorgesehen ist. Im Ausführungsbeispiel ist letzterer in einen ersten und einen zweiten Wärmeaustauscher der Vorerhitzerzone 4.1 und 4.2 aufgeteilt, wobei im ersten 4.1 in einem Gemisch G eine Temperatur von beispielsweise ca. 95 °C und im zweiten 4.2 eine Temperatur von beispielsweise ca. 115 °C erreicht wird. In der sich anschließenden Hocherhitzerzone HZ findet über einen Wärmeaustauscher der Hocherhitzerzone 5 eine Hocherhitzung HE des Gemischs G auf eine Temperatur von beispielsweise ca. 135 °C statt. Die Heißhalterzone HHZ besteht aus einem vorzugsweise aus mehreren Sektionen bestehenden Heißhalter 6, mit dem im Zuge einer Heißhaltung HH bei ca. 135 °C dem Gemisch G mit dem Ziel einer hinreichenden Sterilisation S ein sog. UHT-Profil, ein produktspezifischer Temperatur-Zeit-Verlauf, aufgeprägt werden kann. In dem dargestellten Teilbereich der Kühlzone KZ befindet sich ein erster oder wenigstens ein einziger Wärmeaustauscher der Kühlzone 7, mit denen/dem die trinkfähige Mischung P eine Kühlung K auf eine für eine Abfüllung oder Lagerung geeignete Temperatur von beispielsweise 20 °C erfährt.

Der sich hinter dem letzten Wärmeaustauscher der Vorwärmzone 1 fortsetzende erste Leitungsabschnitt 8.1 mündet an einem Eintritt 2a für die auf ca. 70 °C erwärmte Trägerflüssigkeit TF in eine Dosiervorrichtung 2 ein, wobei sich der Eintritt 2a unterhalb eines Flüssigkeitsspiegels der in der Dosiervorrichtung 2 vorgelegten Trägerflüssigkeit TF befindet. Die Dosiervorrichtung 2 weist weiterhin an ihrer Kopfseite wenigstens einen Zufuhr-Anschluss 2b für wenigstens eine Zerealie Z und/oder Beimengungen auf (im Folgenden beschränkt sich die Beschreibung auf die wenigstens eine Zerealie), in ihrem Innern eine Misch- oder Rühreinrichtung 2c zur Bereitung des aus der Trägerflüssigkeit TF und der wenigstens einen Zerealie Z bestehenden Gemischs G (G = TF + Z) und in ihrem Bodenbereich einen Austritt 2d für das Gemisch G auf. Der Austritt 2d ist über einen zweiten Leitungsabschnitt 8.2 mit dem ersten Wärmeaustauscher der Vorerhitzerzone 4.1 verbunden. Unmittelbar an dem Austritt 2d ist eine Fördereinrichtung 3, vorzugsweise eine rotierende Verdrängerpumpe, beispielsweise in der Ausführung einer SchraubenSpindelpumpe, angeordnet, die das Gemisch G zwangsweise und kontinuierlich mit einem Volumenstrom Q und mit einer Temperatur beispielsweise von ca. 68 °C aus der Dosiervorrichtung 2 heraus- und in den nachfolgenden Teil der Vorrichtung 100 hineinfördert.

Bei der Zerealie Z kann es sich vorzugsweise um Reis R und hier vorzugsweise um einen "Allerweltsreis" oder um Hafer H oder um hier nicht weiter erwähnte Weizenkörner Wz handeln. Reis R und Hafer H werden der Trägerflüssigkeit TF, vorzugsweise Trinkmilch M, jeweils ausschließlich (G = TF + R; G = TF + H) oder, jeweils getrennt voneinander, aber im Endergebnis in Summe (G = TF + H + R) im gewünschten Mengenverhältnis zudosiert. Der Hafer H wird vorzugsweise als Kornware, nicht vorgegart und nativ, kalt und trocken dosiert, während der Reis R vorgegart und warm bei ca. 70 °C und unter laminarer Belüftung dosiert wird. Es wird in dem Gemisch G und damit am Ende der Wärmebehandlung W in dem zweiten Leitungsabschnitt 8.2 ein trinkfähiges Produkt (P = TF + Z) mit einem Mengenanteil Zerealie(n) Z, bezogen auf die Trägerflüssigkeit TF, von 4 % und mehr erreicht.

Bei dem ersten Wärmeaustauscher der Vorerhitzerzone 4.1 und den nachfolgenden Wärmeaustauschern 4.2, 5 und 7 sowie bei dem Heißhalter 6, die von dem Gemisch G auf dem Weg über jeweilige zweite Leitungsabschnitte 8.2 beaufschlagt werden, handelt es sich jeweils um ein sog. Einrohr-System 9 (Monorohr; Monotube), die in Reihe geschalte sind. In diesen Monorohren 9 wird das Gemisch G im Verlauf seiner Wärmebehandlung W bis zur trinkfähigen Mischung P durchgängig als eine unverzweigte Rohrströmung RS zwangsgeführt.

Eine Vorquellung VQ der zudosierten Zerealie(n) Z vollzieht sich im Wesentlichen in der Vor- und Hocherhitzerzone VZ und HZ, während eine Endquellung EQ in der Heißhalterzone HHZ stattfindet.

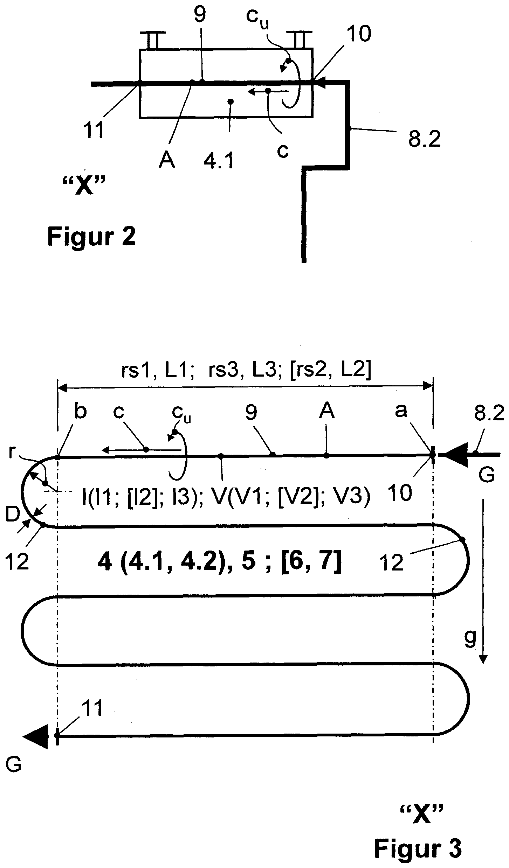

Das jeweilige Monorohr 9 ist in eine Gruppe mäanderförmig sich aneinanderreihende Rohrleitungs-Abschnitte L1 oder L3 zerlegt (siehe hierzu auch die **Figuren** 2 und 3), wobei das Monorohr 9 dabei, strömungstechnisch gesehen, erhalten und unverzweigt bleibt. Bezüglich der Wärmeaustauscher 4 bzw. 4.1, 4.2 und 5 sind diese Rohrleitungs-Abschnitte mit L1 bzw. L3 bezeichnet. Bezüglich des Heißhalters 6 und des Wärmeaustauschers der Kühlzone 7 tragen diese Rohrleitungs-Abschnitte die Bezeichnung L2. Der Heißhalter 6 besteht üblicherweise aus mehreren Sektionen, damit ein produktspezifisches UHT-Profil realisiert werden kann. Jede dieser Sektionen weist eine Gruppe Rohrleitungs-Abschnitte L2 auf. In jeder Gruppe der Monorohre 9 sind die Rohrleitungs-Abschnitte L1, L2, L3 notorisch jeweils gleichlang ausgeführt. Eine diesbezügliche Ausgestaltung ist technisch und thermodynamisch nicht zwingend erforderlich, jedoch unter Kostengesichtspunkten geboten.

Die mäanderförmige Anordnung der Rohrleitungs-Abschnitte L1, L2, L3 ist in **Figur 3** am Beispiel des ersten Wärmeaustauschers der Vorerhitzerzone 4.1 verdeutlicht, und sie zeigt vorzugsweise geradlinige ausgebildete Rohrstrecken, die vorzugsweise parallel und im Abstand zueinander angeordnet und wechselseitig an benachbarten Enden, bei Sicherstellung einer durchgehenden Verbindung in Strömungsrichtung, vorzugsweise mit stetig gekrümmten Strömungselementen, vorzugsweise in Form von Rohrbogen 12, beispielsweise 180-Grad-Rohrbogen, miteinander verbunden sind. Ein mittlerer Krümmungsradius derartiger Rohrbogen 12 ist mit r bezeichnet, sein Außendurchmesser trägt die Bezeichnung D.

Die Rohrbögen 12 der Verrohrung der UHT-Anlage 100 besitzen in den Bereichen der zweiten Leitungsabschnitte 8.2, demzufolge, in Strömungsrichtung gesehen, hinter der Dosiervorrichtung 2, vorzugsweise ein Verhältnis zwischen mittlerem Krümmungsradius r und Rohraußendurchmesser D von r/D = 5. Der Rohrbogen 12 zwischen zwei benachbarten zweiten Rohrleitungs-Abschnitten L2 weist vorzugsweise ein Verhältnis r/D = 3 und jener zwischen zwei benachbarten ersten Rohrleitungs-Abschnitten L1 weist vorzugsweise ein Verhältnis r/D gleich oder kleiner 2 (r/D $\leq$ 2) auf.

Die jeweilige Gruppe der sich mäanderförmig aneinanderreihenden ersten oder zweiten oder dritten Rohrleitungs-Abschnitte L1, L2, L3 ist jeweils vorzugsweise in einer senkrechten Ebene angeordnet. Eine Anordnung in einer waagerechten oder geneigten Ebene soll nicht ausgeschlossen werden. Innerhalb der vorstehend angegebenen Ebene sind die ersten oder zweiten oder dritten Rohrleitungs-Abschnitte L1, L2, L3 in der Waagerechten oder im Wesentlichen in der Waagerechten orientiert. Am oberen Ende der jeweiligen Gruppe ist ein Zulauf-Anschluss 10 und am unteren Ende der jeweiligen Gruppe ist ein Ablauf-Anschluss 11 vorgesehen, sodass die Rohrströmung RS die jeweilige Gruppe, vom Zulauf- 10 zum Ablauf-Anschluss 11 gesehen, gleichsinnig zur Erdbeschleunigung g durchsetzt. Zwischen dem mit Anfang a und Ende b bezeichneten Rohrleitungs-Abschnitt L1, L2 oder L3 besitzt letzterer eine Länge l1 bzw. l2 bzw. l3 und ein Volumen V1 bzw. V2 bzw. V3. Der Zusammenhang zwischen den Rohrleitungs-Abschnitten L1, L2 und L3 und Rohrströmungs-Abschnitten rs1, rs2 und rs3 wurde vorstehend bereits erläutert und über die Gleichungen (1, 1a) dargestellt und wird nachfolgend noch vertieft.

Unter der Voraussetzung eines für alle Monorohre 9 gleichen Durchtrittsquerschnitts A sind zumindest die jeweiligen ersten Rohrleitungs-Abschnitte L1 der Wärmeaustauscher 4, 5 der Vor- und Hocherhitzerzone VZ, HZ kürzer als die jeweiligen zweiten Rohrleitungs-Abschnitte L2 des Heißhalters 6 und des wenigstens einen Wärmeaustauschers 7 der Kühlzone KZ. Jedenfalls sind die ersten Rohrleitungs-Abschnitte L1 kürzer als die dritten Rohrleitungs-Abschnitte L3 der Vor- und Hocherhitzerzone VZ, HZ, wenn die Vor- und Hocherhitzerzone VZ, HZ für die Wärmebehandlung der reinen Trägerflüssigkeit TF, d.h. ohne Beimengung von Zerealien Z, ausgelegt würden. Die zweiten Rohrleitungs-Abschnitte L2 können unter Einhaltung des Sedimentationskriteriums prinzipiell auch entsprechend der Rohrleitungs-Abschnitte L1 verkürzt ausgelegt werden, wenn man den damit verbundenen Kostennachteil unberücksichtigt lässt. Dies ist jedoch strömungsmechanisch wegen der häufigeren Umlenkung mit Blick auf eine möglichst schonende Behandlung der Beimengungen eher von Nachteil.

Durch die Auslegung des jeweiligen Monorohrs 9 in Gruppen von vorzugsweise geradlinigen Rohrleitungs-Abschnitten L1, L2, L3 zwischen einer jeweils beiderseitigen Umlenkung wird die Rohrströmung RS jeweils in zugeordnete Gruppen von Rohrströmungs-Abschnitten rs1, rs2 und rs3 zerlegt, wobei die Rohrströmung RS unverzweigt bleibt. In diesen Rohrströmungs-Abschnitten rs1, rs2 und rs3 besitzt die Rohrströmung RS beispielsweise bei einem für alle Abschnitte vorzugsweise gleichen Durchtrittsquerschnitt A (A = konstant) eine mittlere Strömungsgeschwindigkeit c. Aus dieser folgt für die Rohrströmungs-Abschnitte rs1, rs2 und rs3 nach Gleichung (1a), aber auch für die Rohrleitungs-Abschnitte L1, L2 und L3, eine zugeordnete mittlere erste Verweilzeit t1 = l1/c, eine mittlere zweite Verweilzeit t2 = l2/c und eine mittlere dritte Verweilzeit t3 = l3/c. Damit ist die jeweilige mittlere Aufenthaltsdauer der Beimengungen im jeweiligen Rohrströmungs-Abschnitt rs1, rs2 und rs3 zwischen dem Anfang a und dem Ende b definiert. Die vorstehende Bedingung mit A = konstant ist nicht zwingend. Fällt diese Bedingung für die Rohrströmungs-Abschnitte rs1, rs2, rs3 oder auch für die Rohrleitungs-Abschnitte L1, L2, L3, dann ergeben sich die zugeordneten jeweiligen mittleren Verweilzeiten aus Gleichung (1) mit t1 = V1/Q, t2 = V2/Q und t3 = V3/Q.

Auf der Grundlage der vorstehend dargestellten Zusammenhänge ergibt sich mit der vorliegenden Erfindung ein Verfahren, bei dem

- mit dem Ziel, eine Sedimentation der Zerealie Z und/oder der Beimengungen im Bereich der Vorquellung VQ zu verhindern,
- im Bereich der Vorquellung VQ eine mittlere erste Verweilzeit t1 des Gemischs G in jeweils zugeordneten ersten Rohrströmungs-Abschnitten rs1 kürzer ist
- als eine mittlere zweite Verweilzeit t2 in jeweils zugeordneten zweiten Rohrströmungs-Abschnitten rs2 im Bereich der Endquellung EQ und der nachfolgenden Kühlung K.

Die strömungsmechanischen Wirkungen einer diesbezüglichen verfahrens- und vorrichtungstechnischen Auslegung wurden mit Blick auf die trinkfähige Mischung P und nach Maßgabe der der Erfindung zugrundeliegenden Aufgabenstellung vorstehend bereits ausführlich erläutert.

Es hat sich als besonders zielführend erwiesen, wenn die ersten Rohrleitungs-Abschnitte L1 halb so lang wie die zweiten Rohrleitungs-Abschnitte L2 oder jedenfalls halb so lang wie die dritten Rohrleitungs-Abschnitte L3 sind. Für die konkrete technische Dimensionierung bedeutet dies, wenn man von handelsüblichen, gut handhabbaren und transportablen Rohrlängen von maximal 6 Metern ausgeht, dass die ersten Rohrleitungs-Abschnitte L1 eine Länge von l1 = 3 Metern und die zweiten und die dritten Rohrleitungs-Abschnitte L2, L3 jeweils eine Länge von l2 = l3 = 6 Metern aufweisen.

Zur Erhöhung der Turbulenz gegenüber dem sog. Glattrohr und zur Erzeugung einer vorteilhaften Umfangsgeschwindigkeit $c_u$ wird der axial orientierten, mittleren Strömungsgeschwindigkeit c der Rohrströmung RS im Bereich der Vorquellung VQ zwangsweise eine Strömungsgeschwindigkeit $c_u$ in Umfangsrichtung und/oder eine Turbulenzerhöhung aufgeprägt. Hierzu ist vorgesehen, dass das Monorohr 9 in den Wärmeaustauschern 4, 5 der Vor- und Hocherhitzerzone VZ, HZ wenigstens auf der Oberfläche seiner Rohrinnenwand mit schraubengangförmiger, erhabener oder vertiefender Profilierung (sog. Drallrohr) ausgebildet ist.

BEZUGSZEICHENLISTE DER VERWENDETEN ABKÜRZUNGEN

100 Teilbereich einer Vorrichtung (UHT-Anlage)
1 (regenerativer) letzter Wärmeaustauscher der Vorwärmzone

2 Dosiervorrichtung
2a Eintritt (für Trägerflüssigkeit TF)
2b Zufuhr-Anschluss (für Zerealie Z)
2c Rühr- oder Mischeinrichtung
2d Austritt (Gemisch G = TF + Z)

3 Fördereinrichtung

4 (regenerativer) Wärmeaustauscher der Vorerhitzerzone
4.1 (regenerativer) erster Wärmeaustauscher der Vorerhitzerzone
4.2 (regenerativer) zweiter Wärmeaustauscher der Vorerhitzerzone

5 Wärmeaustauscher der Hocherhitzerzone
6 Heißhalter
7 (regenerativer) erster Wärmeaustauscher der Kühlzone

8.1 erster Leitungsabschnitt
8.2 zweite Leitungsabschnitte

9 Einrohr-System (Monorohr; Monotube)
10 Zulauf-Anschluss
11 Ablauf-Anschluss
12 Rohrbogen

a, b Anfang und Ende eines Rohrströmungs-Abschnitts rs oder eines Rohrleitungs-Abschnitts L
c mittlere Strömungsgeschwindigkeit
$c_u$ Umfangsgeschwindigkeit
g Erdbeschleunigung

l Länge eines Rohrströmungs-Abschnitts rs oder eines Rohrleitungs-Abschnitts L zwischen einem Anfang a und einem Ende b (allgemein)
l1, l2, l3 Länge des Rohrströmungs-Abschnitts rs1, rs2, rs3 bzw. des Rohrleitungs-Abschnitts L1, L2, L3

r mittlerer Krümmungsradius (Rohrbogen)

rs1 erster Rohrströmungs-Abschnitt l1 (rs1) = l1(L1) für c = und A = konst)
rs2 zweiter Rohrströmungs-Abschnitt (l2(rs2) = l1(L2) für c = und A = konst)
rs3 dritter Rohrströmungs-Abschnitt (l3(rs3) = l3(L3) für c = und A = konst), wenn dieser für reine Trägerflüssigkeit TF ausgelegt ist)

t mittlere Verweilzeit (allgemein)
t1 mittlere erste Verweilzeit (in der Vorquellung VQ; im ersten Rohrströmungs-Abschnitt rs1 oder im ersten Rohrleitungs-Abschnitt L1; t1 = l1/c)
t2 mittlere zweite Verweilzeit (in der Endquellung EQ; im zweiten Rohrströmungs-Abschnitt rs2 oder im zweiten Rohrleitungs-Abschnitt L2; t2 = l2/c)
t3 mittlere dritte Verweilzeit (reine Trägerflüssigkeit TF; in der Vorerhitzung VE oder der Hocherhitzung HE; im ersten Rohrströmungs-Abschnitt rs1 oder im ersten Rohrleitungs-Abschnitt L1; t3 = l3/c)

A Durchtrittsquerschnitt (Monorohr 9)
D Außendurchmesser (Rohrbogen)
EQ Endquellung
G Gemisch (Trägerflüssigkeit TF + Zerealie(n) Z)
H Hafer

HE Hocherhitzung
HZ Hocherhitzerzone
HH Heißhaltung
HHZ Heißhalterzone

K Kühlung
KZ Kühlzone

L Rohrleitungs-Abschnitt (allgemein)
L1 erster Rohrleitungs-Abschnitt (in der Vorerhitzerzone VZ oder Hocherhitzerzone HZ)
L2 zweiter Rohrleitungs-Abschnitt (in der Heißhalterzone HHZ oder Kühlzone KZ)
L3 dritter Rohrleitungs-Abschnitt (in der Vorerhitzerzone VZ oder Hocherhitzerzone HZ, wenn dieser für reine Trägerflüssigkeit TF ausgelegt ist)

M Trinkmilch
P trinkfähig Mischung
Q Volumenstrom (TF + Z)
R Reis
RS Rohrströmung
S Sterilisation
TF Trägerflüssigkeit
V Volumen eines Rohrströmungs-Abschnitts rs oder eines Rohrleitungs-Abschnittes L (allgemein)
V1,V2,V3 Volumen des Rohrströmungs-Abschnitts rs1, rs2, rs3 bzw. des Rohrleitungs-Abschnitts L1, L2, L3

VE Vorerhitzung
VZ Vorerhitzerzone
VW Vorwärmung
VWZ Vorwärmzone

VQ Vorquellung
W Wärmebehandlung
Wz Weizenkörner
Z Zerealie(n)

**Patentansprüche**

1. Verfahren zur Herstellung einer trinkfähigen Mischung (P) aus einer Trägerflüssigkeit (TF) und wenigstens einer Zerealie (Z) und/oder anderen kleinstückigen Beimengungen unter aseptischen Bedingungen, bei dem die Trägerflüssigkeit (TF) eine Vorwärmung (VW) erfährt, bei dem die wenigstens eine Zerealie (Z) in die vorgewärmte Trägerflüssigkeit (TF) dosiert und in dieser gleichverteilt wird, bei dem ein Gemisch (G) aus Trägerflüssigkeit (TF) und der wenigstens einen Zerealie (Z) bis zu seiner Abfüllung als trinkfähige Mischung (P) in der nachstehend genannten Reihenfolge einer Wärmebehandlung (W) durch eine Vorerhitzung (VE), eine Hocherhitzung (HE), eine Heißhaltung (HH) und eine Kühlung (K) unterzogen wird, bei der im Verlauf der Vorerhitzung (VE) und der Hocherhitzung (HE) eine Vorquellung (VQ) der wenigstens einen Zerealie (Z) erfolgt, bei dem in der Heißhaltung (HH) eine Endquellung (EQ) der Zerealie (Z) und eine Sterilisation (S) des Gemischs (G) erfolgt, bei dem das Gemisch (G) im Verlauf seiner Wärmebehandlung (W) bis zur trinkfähigen Mischung (P) durchgängig als eine unverzweigte Rohrströmung (RS) zwangsgeführt wird, bei dem in den jeweiligen Teilbereichen der Wärmebehandlung (W; VE, HE, HH, K) die unverzweigte Rohrströmung (RS) in eine Gruppe mäanderförmig sich aneinanderreihende Rohrströmungs-Abschnitte (rs1; rs2) zerlegt wird und dabei als Rohrströmung (RS) unverzweigt bleibt, und bei dem

   • mit dem Ziel, eine Sedimentation der wenigstens einen Zerealie (Z) und/oder der Beimengungen im Bereich der Vorquellung (VQ) zu verhindern,
   • im Bereich der Vorquellung (VQ) eine mittlere erste Verweilzeit (t1) des Gemischs (G) in jeweils zugeordneten ersten Rohrströmungs-Abschnitten (rs1) kürzer ist
   • als eine mittlere zweite Verweilzeit (t2) in jeweils zugeordneten zweiten Rohrströmungs-Abschnitten (rs2) im Bereich der Endquellung (EQ) und der nachfolgenden Kühlung (K).

2. Verfahren nach Anspruch 1,
   **dadurch gekennzeichnet,**
   **dass** die mittlere erste Verweilzeit (t1) kürzer ist als eine mittlere dritte Verweilzeit (t3), die sich in dritten Rohrströmungs-Abschnitten (rs3) der Vorerhitzung (VE) oder Hocherhitzung (HE) einstellen würde, wenn die Vor- und Hocherhitzung (VE, HE) für die reine Trägerflüssigkeit (TF) ausgelegt würden.

3. Verfahren nach Anspruch 1 oder 2,
   **dadurch gekennzeichnet,**
   **dass** die mittlere erste Verweilzeit (t1) in jedem ersten Rohrströmungs-Abschnitt (rs1) seiner zugeordneten Gruppe gleichlang bemessen ist, und dass die mittlere zweite Verweilzeit (t2) in jedem zweiten Rohrströmungs-Abschnitt (rs2) seiner zugeordneten Gruppe gleichlang bemessen ist.

4. Verfahren nach einem der vorhergehenden Ansprüche,
   **dadurch gekennzeichnet,**
   **dass** die mittlere erste Verweilzeit (t1) halb so groß wie die mittlere zweite Verweilzeit (t2) oder die mittlere dritte Verweilzeit (t3) bemessen ist.

5. Verfahren nach einem der vorhergehenden Ansprüche,
   **dadurch gekennzeichnet,**
   **dass** der axial orientierten, mittleren Strömungsgeschwindigkeit (c) der Rohrströmung (RS) im Bereich der Vorquellung (VQ) zwangsweise eine Strömungsgeschwindigkeit ($c_u$) in Umfangsrichtung und/oder eine Turbulenzerhöhung aufgeprägt wird.

6. Verfahren nach einem der vorhergehenden Ansprüche,
   **dadurch gekennzeichnet,**
   **dass** das Gemisch (G) die jeweilige Gruppe der sich in einer senkrechten Ebene mäanderförmig aneinanderreihenden und dort in der Waagerechten orientierten ersten und zweiten Rohrströmungs-Abschnitte (rs1; rs2) von oben nach unten in Richtung der Erdbeschleunigung (g) durchströmt.

7. Verfahren nach einem der vorhergehenden Ansprüche,
   **dadurch gekennzeichnet,**
   **dass** die Umlenkung der Rohrströmung (RS) zwischen zwei benachbarten ersten Rohrströmungs-Abschnitten (rs1) mit größerer Krümmung als zwischen zwei benachbarten zweiten Rohrströmungs-Abschnitten (rs2) durchgeführt wird, und dass die Umlenkung der Rohrströmung (RS) in Bereichen außerhalb der ersten oder zweiten Rohrströmungs-Abschnitte (rs1, rs2) und, in Strömungsrichtung gesehen, hinter der Dosierung mit kleinerer Krümmung als zwischen zwei benachbarten zweiten Rohrströmungs-Abschnitten (rs2) vollzogen wird.

8. Verfahren nach einem der vorhergehenden Ansprüche,
**dadurch gekennzeichnet,**
**dass** das Gemisch (G) unmittelbar nach seiner Zubereitung durch ein Verdrängerprinzip zwangsgefördert wird.

9. Verfahren nach einem der vorhergehenden Ansprüche,
**dadurch gekennzeichnet,**
**dass** bei der Trägerflüssigkeit (TF) eine Trinkmilch (M) und bei der wenigstens einen Zerealie (Z) zwischen Hafer (H), Reis (R) oder Weizenkörner (Wz) gewählt wird.

10. Verfahren nach Anspruch 9,
**dadurch gekennzeichnet,**
**dass** der Hafer (H) als Kornware, nicht vorgegart und nativ, kalt und trocken dosiert wird und dass die Weizenkörner (Wz), mit kaltem Wasser gewässert, dosiert werden.

11. Verfahren nach Anspruch 9,
**dadurch gekennzeichnet,**
**dass** der Reis (R) vorgegart und warm bei 70 °C und unter laminarer Belüftung dosiert wird.

12. Vorrichtung zur Durchführung des Verfahrens nach einem der Ansprüche 1 bis 11, die als UHT-Anlage ausgebildet ist zur Wärmebehandlung des Gemischs (G) mit dem Ziel der Herstellung der trinkfähigen Mischung (P) unter aseptischen Bedingungen, mit einer, in Strömungsrichtung des Gemischs (G) gesehen, Vorwärmzone (VWZ), die wenigstens einen Wärmeaustauscher der Vorwärmzone (1) aufweist, mit einer Vorerhitzerzone (VZ), die wenigstens einen Wärmeaustauscher der Vorerhitzerzone (4) aufweist, mit einer Hocherhitzerzone (HZ), die wenigstens einen Wärmeaustauscher der Hocherhitzerzone (5) aufweist, mit einer Heißhalterzone (HHZ), die einen Heißhalter (6) aufweist, und mit einer Kühlzone (KZ), die wenigstens einen Wärmeaustauscher der Kühlzone (7) aufweist,
**dadurch gekennzeichnet,**

• **dass** zwischen der Vorwärmzone (VWZ) und der Vorerhitzerzone (VZ) eine Dosiervorrichtung (2) zur Einbringung der wenigstens einen Zerealie (Z) in die Trägerflüssigkeit (TF) vorgesehen ist,
• **dass** die, in Strömungsrichtung des Gemischs (G) gesehen, der Dosiervorrichtung (2) nachfolgenden Wärmeaustauscher (4, 5, 7) und der Heißhalter (6) jeweils als Einrohr-System (Monorohr) (9) ausgebildet und diese in Reihe geschaltet sind,
• **dass** das jeweilige Monorohr (9) in eine Gruppe mäanderförmig sich aneinanderreihende Rohrleitungs-Abschnitte (L1, L2) zerlegt ist und dabei, strömungstechnisch gesehen, als Monorohr (9) erhalten bleibt,
• und **dass** unter der Voraussetzung eines für alle Monorohre (9) gleichen Durchtrittsquerschnitts (A)

◦ die jeweiligen ersten Rohrleitungs-Abschnitte (L1) der Wärmeaustauscher (4, 5) der Vor- und Hocherhitzerzone (VZ, HZ) kürzer sind
◦ als die jeweiligen zweiten Rohrleitungs-Abschnitte (L2) des Heißhalters (6) und des wenigstens einen Wärmeaustauschers (7) der Kühlzone (KZ).

13. Vorrichtung nach Anspruch 12,
**dadurch gekennzeichnet,**
**dass** der jeweilige erste Rohrleitungs-Abschnitt (L1) kürzer ist als jeweilige dritte Rohrleitungs-Abschnitte (L3) der Vor- und Hocherhitzerzone (VZ, HZ), die sich ergäben, wenn die Vor- und Hocherhitzerzone (VZ, HZ) für die reine Trägerflüssigkeit (TF) ausgelegt würden.

14. Vorrichtung nach Anspruch 12 oder 13,
**dadurch gekennzeichnet,**
**dass** jeder erste Rohrleitungs-Abschnitt (L1) in seiner zugeordneten Gruppe gleichlang ausgeführt ist, und dass jeder zweite Rohrleitungs-Abschnitt (L2) in seiner zugeordneten Gruppe gleichlang ausgeführt ist.

15. Vorrichtung nach einem der Ansprüche 12 bis 14,
**dadurch gekennzeichnet,**
**dass** die ersten Rohrleitungs-Abschnitte (L1) jeweils halb so lang wie die zweiten (L2) oder die dritten Rohrleitungs-Abschnitte (L3) sind.

**16.** Vorrichtung nach einem der Ansprüche 12 bis 15,
**dadurch gekennzeichnet,**
**dass** die ersten Rohrleitungs-Abschnitte (L1) jeweils eine Länge von 3 Metern und die zweiten Rohrleitungs-Abschnitte (L2) jeweils eine Länge von 6 Metern aufweisen.

**17.** Vorrichtung nach einem der Ansprüche 12 bis 16,
**dadurch gekennzeichnet,**
**dass** das Monorohr (9) in den Wärmeaustauschern (4, 5) der Vor- und Hocherhitzerzone (VZ, HZ) wenigstens auf der Oberfläche seiner Rohrinnenwand mit schraubengangförmiger, erhabener oder vertiefender Profilierung ausgebildet ist.

**18.** Vorrichtung nach einem der Ansprüche 12 bis 17,
**dadurch gekennzeichnet,**
**dass** die jeweilige Gruppe der sich mäanderförmig aneinanderreihenden ersten oder zweiten oder dritten Rohrleitungs-Abschnitte (L1; L2; L3) jeweils in einer senkrechten Ebene angeordnet sind, dass die ersten oder zweiten oder dritten Rohrleitungs-Abschnitte (L1; L2; L3) in der senkrechten Ebene jeweils in der Waagerechten orientiert sind, und dass am oberen Ende der jeweiligen Gruppe ein Zulauf- (10) und am unteren Ende der jeweiligen Gruppe ein Ablauf-Anschluss (11) vorgesehen ist.

**19.** Vorrichtung nach einem der Ansprüche 12 bis 18,
**dadurch gekennzeichnet,**
**dass** Rohrbögen (12) der Verrohrung der UHT-Anlage (100), in Strömungsrichtung gesehen, hinter der Dosiervorrichtung (2) ein Verhältnis zwischen mittlerem Krümmungsradius r und Rohraußendurchmesser D von r/D = 5, ein Rohrbogen (12) zwischen zwei benachbarten zweiten Rohrleitungs-Abschnitten (L2) ein Verhältnis r/D = 3 und zwischen zwei benachbarten ersten Rohrleitungs-Abschnitten (L1) ein Verhältnis r/D gleich oder kleiner 2 (r/D ≤ 2) aufweist.

**20.** Vorrichtung nach einem der Ansprüche 12 bis 19,
**dadurch gekennzeichnet,**
**dass** unmittelbar an einem Austritt (2d) der Dosiervorrichtung (2) für das Gemisch (G) eine rotierende Verdrängerpumpe (3) in Gestalt einer Schrauben-Spindel-Pumpe angeordnet ist.

**Claims**

**1.** A method for producing a drinkable mixture (P) from a carrier liquid (TF) and at least one cereal (Z) and/or other small-sized admixtures under aseptic conditions, in which the carrier liquid (TF) undergoes a pre-warming (VW), in which the at least one cereal (Z) is dispensed into and evenly distributed in the pre-warmed carrier liquid (TF), in which a mix (G) of carrier liquid (TF) and the at least one cereal (Z), up to its filling as a drinkable mixture (P), is put through a heat treatment (W) in the following sequence: through a pre-heating (VE), a high-heating (HE), a heat maintaining (HH) and a cooling (K), in which, over the course of the pre-heating (VE) and the high-heating (HE), a pre-swelling (VQ) of the at least one cereal (Z) occurs, in which, during the heat maintaining (HH), a final swelling (EQ) of the cereal (Z) and a sterilization (S) of the mix (G) occurs, in which the mix (G), over the course of its heat treatment (W) up to the drinkable mixture (P), is continually forcibly guided as an unbranched tubular flow (RS), in which, in the respective sections of the heat treatment (W; VE, HE, HH, K), the unbranched tubular flow (RS) is broken down into a group of tubular flow segments (rs1; rs2) strung together in a meandering shape and thereby remains unbranched as a pipe flow, and in which

- with the goal of preventing a sedimentation of the at least one cereal (Z) and/or of the admixtures in the region of the pre-swelling (VQ),
- in the region of the pre-swelling (VQ) an average first holding time (t1) of the mix (G) is shorter in respective assigned first tubular flow segments (rs1)
- than an average second holding time (t2) in respective assigned second tubular flow segments (rs2) in the region of the final swelling (EQ) and the subsequent cooling (K).

**2.** The method according to claim 1,
**characterized in that**
the average first holding time (t1) is shorter than an average third holding time (t3) that would be set in third tubular flow segments (rs3) of the pre-heating (VE) or high-heating (HE) if the pre- and high-heating (VE, HE) were configured for the pure carrier liquid (TF).

3. The method according to claim 1 or 2,
   **characterized in that**
   the average first holding time (t1) is the same length in each first tubular flow segment (rs1) of its assigned group, and the average second holding time (t2) is the same length in each second tubular flow segment (rs2) of its assigned group.

4. The method according to one of the preceding claims,
   **characterized in that**
   the average first holding time (t1) is half as long as the average second holding time (t2) or the average third holding time (t3).

5. The method according to one of the preceding claims,
   **characterized in that**
   a flow speed ($c_u$) in the peripheral direction and/or an increase in turbulence is forcibly applied to the axially oriented, average flow speed (c) of the tubular flow (RS) in the region of the pre-swelling (VQ).

6. The method according to one of the preceding claims,
   **characterized in that**
   the mix (G) flows from top to bottom in the direction of gravity (g) through the respective group of the first and second tubular flow segments (rs1; rs2) strung together in a meandering shape in a vertical plane and there horizontally oriented.

7. The method according to one of the preceding claims,
   **characterized in that**
   the redirection of the tubular flow (RS) between two adjacent first tubular flow segments (rs1) with larger curvature as between two adjacent second tubular flow segments (rs2) is performed, and the redirection of the tubular flow (RS) in regions outside of the first or second tubular flow segments (rs1, rs2) and, seen in the direction of flow, behind the dispensing with smaller curvature as between two adjacent second tubular flow segments (rs2) is carried out.

8. The method according to one of the preceding claims,
   **characterized in that**
   the mix (G) is forcibly conveyed by a positive displacement principle directly after its preparation.

9. The method according to one of the preceding claims,
   **characterized in that**
   in the case of the carrier liquid (TF) a drinking milk (M) is chosen, and in the case of the at least one cereal (Z) oats (H), rice (R) or wheat grains (Wz) are chosen.

10. The method according to claim 9,
    **characterized in that**
    the oats (H) are dispensed as grains, not pre-cooked and natural, cold and dry, and the wheat grains (Wz) are dispensed soaked in cold water.

11. The method according to claim 9,
    **characterized in that**
    the rice (R) is dispensed pre-cooked and warm at 70° C and under laminar ventilation.

12. A device for performing the method according to one of claims 1 to 11 that is designed as a UHT plant for heat treating the mix (G) with the goal of producing the drinkable mixture (P) under aseptic conditions with, seen in the direction of flow of the mix (G), a pre-warming area (VWZ) that has at least one heat exchanger of the pre-warming area (1), with a pre-heating area (VZ) that has at least one heat exchanger of the pre-heating area (4), with a high-heating area (HZ) that has at least one heat exchanger of the high-heating area (5), with a heat-maintaining area (HHZ) that has a heat maintainer (6), and with a cooling area (KZ) that has at least one heat exchanger of the cooling area (7),

**characterized in that**

- between the pre-warming area (VWZ) and the pre-heating area (VZ) a dispensing device (2) is provided for introducing the at least one cereal (Z) into the carrier liquid (TF),
- seen in the direction of flow of the mix (G), the heat exchangers (4, 5, 7) following the dispensing device (2) and the heat maintainer (6) are each designed as a single-tube system (mono-tube) (9) and are connected in series,
- the respective mono-tube (9) is broken down into a group of pipeline segments (L1, L2) strung together in a meandering shape and thereby, in terms of the flow, remains as a mono-tube (9),
- and under the precondition of a passage cross-section (A) that is the same for all mono-tubes (9)

- the respective first pipeline segments (L1) of the heat exchangers (4, 5) of the pre- and high-heating area (VZ, HZ) are shorter
- than the respective second pipeline segments (L2) of the heat maintainer (6) and the at least one heat exchanger (7) of the cooling area (KZ).

13. The device according to claim 12,
**characterized in that**
the respective first pipeline segment (L1) is shorter than respective third pipeline segments (L3) of the pre- and high-heating area (VZ, HZ) that would result if the pre- and high-heating area (VZ, HZ) were configured for the pure carrier liquid (TF).

14. The device according to claim 12 or 13,
**characterized in that**
each first pipeline segment (L1) in its assigned group is designed the same length, and each second pipeline segment (L2) in its assigned group is designed the same length.

15. The device according to one of claims 12 to 14,
**characterized in that**
the first pipeline segments (L1) are each half as long as the second (L2) or the third pipeline segments (L3).

16. The device according to one of claims 12 to 15,
**characterized in that**
the first pipeline segments (L1) each have a length of 3 meters and the second pipeline segments (L2) each have a length of 6 meters.

17. The device according to one of claims 12 to 16,
**characterized in that**
the mono-tube (9) in the heat exchangers (4, 5) of the pre- and high-heating area (VZ, HZ) is designed at least on the surface of its tube inner wall with threaded, raised or deepened profiling.

18. The device according to one of claims 12 to 17,
**characterized in that**
the respective group of first or second or third pipeline segments (L1; L2; L3) strung together in a meandering shape is each arranged in a vertical plane, the first or second or third pipeline segments (L1; L2; L3) in the vertical plane are each oriented horizontally, and an inflow connection (10) is provided on the upper end of the respective group and an outflow connection (11) is provided on the lower end of the respective group.

19. The device according to one of claims 12 to 18,
**characterized in that**
tube bends (12) of the piping of the UHT plant (100), seen in the direction of flow, behind the dispensing device (2) have a ratio between the average curvature radius r and tube outer diameter D of r/D = 5, a tube bend (12) between two adjacent second pipeline segments (L2) has a ratio of r/D = 3 and between two adjacent first pipeline segments (L1) has a ratio of r/D equaling or smaller than 2 (r/D ≤ 2).

20. The device according to one of claims 12 to 19,
**characterized in that**
a rotating positive displacement pump (3) in the form of a screw pump is arranged directly on an outlet (2d) of the dispensing device (2) for the mix (G).

**Revendications**

1. Procédé pour la fabrication d'une composition buvable (P) à partir d'un véhicule liquide (TF) et d'au moins une céréale (Z) et/ou d'autres mélanges en petits morceaux dans des conditions aseptiques, dans lequel le véhicule liquide (TF) est soumis à un préchauffage (VW), dans lequel l'au moins une céréale (Z) est dosée dans le véhicule liquide (TF) préchauffé et répartie de façon homogène dans celui-ci, dans lequel un mélange (G) de véhicule liquide (TF) et de l'au moins une céréale (Z) est soumis à un traitement thermique (W) comprenant, dans l'ordre suivant, un préchauffage (VE), un chauffage élevé (HE), un maintien à température (HH) et un refroidissement (K), jusqu'à son conditionnement en tant que composition buvable (P), où l'au moins une céréale (Z) est gonflée préalablement (VQ) pendant le préchauffage (VE) et le chauffage élevé (HE), dans lequel, pendant le maintien à température (HH), la céréale (Z) est soumise à un gonflage final (EQ) et le mélange (G) est stérilisé (S), dans lequel le mélange (G) est guidé de force en continu comme un écoulement de tuyau non ramifié (RS) pendant son traitement thermique (W) jusqu'à la composition buvable (P), dans lequel, dans les différentes régions partielles du traitement thermique (W ; VE, HE, HH, K), l'écoulement de tuyau non ramifié (RS) est décomposé en un groupe de sections d'écoulement de tuyau (rs1 ; rs2) se succédant en forme de méandres, tout en restant non ramifié en tant qu'écoulement de tuyau (RS), et dans lequel

   • dans le but d'empêcher une sédimentation de l'au moins une céréale (Z) et/ou des autres mélanges dans la région du gonflage préalable (VQ),
   • un premier temps de séjour moyen (t1) du mélange (G) dans des premières sections d'écoulement de tuyau (rs1) respectivement attribuées dans la région du gonflage préalable (VQ) est plus court
   • qu'un deuxième temps de séjour moyen (t2) dans des deuxièmes sections d'écoulement de tuyau (rs2) dans la région du gonflage final (EQ) et du refroidissement (K) consécutif.

2. Procédé selon la revendication 1,
   **caractérisé en ce que**
   le premier temps de séjour moyen (t1) est plus court qu'un troisième temps de séjour moyen (t3) susceptible de s'établir dans des troisièmes sections d'écoulement de tuyau (rs3) du préchauffage (VE) ou du chauffage élevé (HE) si le préchauffage et le chauffage élevé (VE, HE) étaient destinés au véhicule liquide (TF) pur.

3. Procédé selon la revendication 1 ou 2,
   **caractérisé en ce que**
   le premier temps de séjour moyen (t1) dans chaque première section d'écoulement de tuyau (rs1) de son groupe attribué est calculé sur une même durée, et **en ce que** le deuxième temps de séjour moyen (t2) dans chaque deuxième section d'écoulement de tuyau (rs2) de son groupe attribué est calculé sur une même durée.

4. Procédé selon l'une des revendications précédentes,
   **caractérisé en ce que**
   le premier temps de séjour moyen (t1) est calculé sur une durée correspondant à la moitié du deuxième temps de séjour moyen (t2) ou du troisième temps de séjour moyen (t3).

5. Procédé selon l'une des revendications précédentes,
   **caractérisé en ce que**
   une vitesse d'écoulement ($c_u$) dans le sens périphérique et/ou une augmentation de turbulence est appliquée de force à la vitesse d'écoulement moyenne (c) orientée axialement de l'écoulement de tuyau (RS) dans la région du gonflage préalable (VQ).

6. Procédé selon l'une des revendications précédentes,
   **caractérisé en ce que**
   le mélange (G) traverse le groupe respectif des premières et deuxièmes sections d'écoulement de tuyau (rs1 ; rs2) se succédant en forme de méandres dans un plan vertical tout en étant orientées horizontalement, de haut en bas dans le sens de la gravité (g).

7. Procédé selon l'une des revendications précédentes,
   **caractérisé en ce que**

la déviation de l'écoulement de tuyau (RS) entre deux premières sections d'écoulement de tuyau (rs1) voisines est réalisée avec un coude plus grand qu'entre deux deuxièmes sections d'écoulement de tuyau (rs2) voisines, et **en ce que** la déviation de l'écoulement de tuyau (RS) dans des régions extérieures à la première ou deuxième section d'écoulement de tuyau (rs1, rs2) et après le dosage, vu dans la direction d'écoulement, est effectuée avec un coude plus petit qu'entre deux deuxièmes sections d'écoulement de tuyau (rs2) voisines.

8. Procédé selon l'une des revendications précédentes,
**caractérisé en ce que**
le mélange (G) est guidé de force selon un principe de déplacement positif immédiatement après sa préparation.

9. Procédé selon l'une des revendications précédentes,
**caractérisé en ce que**
un lait de consommation (M) est choisi comme véhicule liquide (TF) et de l'avoine (H), du riz (R) ou des grains de blé (Wz) sont choisis comme l'au moins une céréale (Z).

10. Procédé selon la revendication 9,
**caractérisé en ce que**
l'avoine (H) est dosée à froid et à sec sous forme de grain non précuit et natif, et **en ce que** les grains de blé (Wz) sont dosés en étant arrosés avec de l'eau froide.

11. Procédé selon la revendication 9,
**caractérisé en ce que**
le riz (R) est précuit et dosé à chaud à 70°C avec une aération laminaire.

12. Dispositif pour la mise en oeuvre du procédé selon l'une des revendications 1 à 11, lequel est conçu comme une installation UHT pour le traitement thermique (W) du mélange (G) dans le but de fabriquer la composition buvable (P) dans des conditions aseptiques, avec, dans le sens d'écoulement du mélange (G), une zone de préchauffage (VWZ) présentant au moins un échangeur de chaleur de la zone de préchauffage (1), une zone de chauffage préalable (VZ) présentant au moins un échangeur de chaleur de la zone de chauffage préalable (4), une zone de chauffage élevé (HZ) présentant au moins un échangeur de chaleur de zone de chauffage élevé (5), une zone de maintien à température (HHZ) présentant un chambreur (6), et une zone de refroidissement (KZ) présentant au moins un échangeur de chaleur de la zone de refroidissement (7),
**caractérisé en ce que**

• un dispositif de dosage (2) est prévu entre la zone de préchauffage (VWZ) et la zone de chauffage préalable (VZ) pour l'introduction de l'au moins une céréale (Z) dans le véhicule liquide (TF),
• **en ce que** les échangeurs de chaleur (4, 5, 6) consécutifs au dispositif de dosage (2), vus dans la direction d'écoulement du mélange (G), et le chambreur (6) sont respectivement conçus comme un système à un tuyau (mono-tuyau) (9) et reliés en série,
• **en ce que** le mono-tuyau (9) respectif est décomposé en un groupe de sections d'écoulement de tuyau (L1, L2) se succédant en forme de méandres, tout en étant maintenu comme mono-tuyau (9) du point de vue de la technique d'écoulement,
• et **en ce que**, à condition que tous les mono-tuyaux (9) présentent une section de passage (A) identique,

○ les différentes premières sections d'écoulement de tuyau (L1) des échangeurs de chaleur (4, 5) des zones de chauffage préalable et de chauffage élevé (VZ, HZ) sont plus courtes
○ que les différentes deuxièmes sections d'écoulement de tuyau (L2) du chambreur (6) et de l'au moins un échangeur de chaleur (7) de la zone de refroidissement (KZ).

13. Dispositif selon la revendication 12,
**caractérisé en ce que**
la première section d'écoulement de tuyau (L1) respective est plus courte que des troisièmes sections d'écoulement de tuyau (L3) respectives des zones de chauffage préalable et de chauffage élevé (VZ, HZ) susceptibles de se présenter si les zones de chauffage préalable et de chauffage élevé (VZ, HZ) étaient destinées au véhicule liquide (TF) pur.

14. Dispositif selon la revendication 12 ou 13,
**caractérisé en ce que**

chaque première section d'écoulement de tuyau (L1) dans son groupe correspondant est conçue de la même longueur, et **en ce que** chaque deuxième section d'écoulement de tuyau (L2) dans son groupe correspondant est conçue de la même longueur.

**15.** Dispositif selon l'une des revendications 12 à 14,
**caractérisé en ce que**
les premières sections d'écoulement de tuyau (L1) présentent respectivement une longueur deux fois plus courte que les deuxièmes (L2) ou les troisièmes sections d'écoulement de tuyau (L3).

**16.** Dispositif selon l'une des revendications 12 à 15,
**caractérisé en ce que**
les premières sections d'écoulement de tuyau (L1) présentent respectivement une longueur de 3 mètres et les deuxièmes sections d'écoulement de tuyau (L2) présentent respectivement une longueur de 6 mètres.

**17.** Dispositif selon l'une des revendications 12 à 16,
**caractérisé en ce que**
le mono-tuyau (9) dans les échangeurs de chaleur (4, 5) des zones de chauffage préalable et de chauffage élevé (VZ, HZ) est formé avec un profilage en forme de pas de vis, surélevé ou renfoncé, au moins sur la surface supérieure de sa paroi intérieure de tuyau.

**18.** Dispositif selon l'une des revendications 12 à 17,
**caractérisé en ce que**
le groupe respectif des premières ou deuxièmes ou troisièmes sections d'écoulement de tuyau (L1 ; L2 ; L3) se succédant en forme de méandres est respectivement disposé dans un plan vertical, **en ce que** les premières ou deuxièmes ou troisièmes sections d'écoulement de tuyau (L1 ; L2 ; L3) dans le plan vertical sont respectivement orientées horizontalement, et **en ce qu'**un raccord d'arrivée (10) est prévu à l'extrémité supérieure du groupe respectif, et un raccord d'évacuation (11) est prévu à l'extrémité inférieure du groupe respectif.

**19.** Dispositif selon l'une des revendications 12 à 18,
**caractérisé en ce que**
des coudes (12) de la tuyauterie de l'installation UHT (100) présentent un rapport entre le rayon de courbure moyen r et le diamètre extérieur de tuyau D de r/D = 5 après le dispositif de dosage (2) vus dans la direction d'écoulement, un coude (12) présente un rapport r/D = 3 entre deux deuxièmes sections d'écoulement de tuyau (L2) voisines et un rapport r/D égal ou inférieur à $2(r/D \leq 2)$ entre deux premières sections d'écoulement de tuyau (L1) voisines.

**20.** Dispositif selon l'une des revendications 12 à 19,
**caractérisé en ce que**
une pompe volumétrique rotative (3) sous la forme d'une pompe à broche et à vis est disposée immédiatement au niveau d'une sortie (2d) du dispositif de dosage (2) pour le mélange (G).

Figur 1

**"X"**

**Figur 2**

rs1, L1; rs3, L3; [rs2, L2]

b    c    $c_u$    9    A    a    8.2

r

I(I1; [I2]; I3); V(V1; [V2]; V3)    10

D

12

**4 (4.1, 4.2), 5 ; [6, 7]**    12

g

11

G

**"X"**

**Figur 3**

**EP 3 099 180 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0662284 A1
- DE 102005055016 A1
- US 1109975 A
- DE 9403913 U